# EUROPEAN PATENT APPLICATION

(11) **EP 2 689 832 A1**
(43) Date of publication of application: **29.01.2014**
(21) Application number: 13177529.8
(22) Date of filing: 23.07.2013
(51) Int. Cl.: B01F 13/00, G01F 19/00, B65D 25/08

(54) **Device for preparing mixtures of liquids**

(30) Priority: 24.07.2012 IT FI20120045 U
(71) Applicant: Rosati, Teresa Anna Maria, 51035 Lamporecchio (IT)
(72) Inventor: Rosati, Teresa Anna Maria, 51035 Lamporecchio (IT)
(74) Representative: Brighenti, Livio

(57) **Abstract**

A device is disclosed consisting of two or more containers of different sizes from one another, dimensioned in such a way that when the two liquids reach the same level a known volume ratio will be present.

## Description

### Field of the invention

The invention relates to the field of articles for metering liquids, in particular for preparing two-part liquid/liquid mixtures.

### Prior art

As it is known, in many cases it is necessary to mix two liquid components at the same time so as to obtain a mixture in which the two components are in a determined ratio; for example, there is the need to supply two-stroke engines with a petrol/oil mixture which is no longer available from suppliers for ecological reasons and therefore has to be prepared by the user at the time of use.

To prepare these mixtures, the relative amounts of the two components (by volume or weight) are normally measured and subsequently mixed together; it is therefore necessary to resort to graduated containers or to the use of a scale so as to be able to measure the respective amounts to be mixed.

The usefulness of a device which makes it possible to obtain the desired mixtures with greater simplicity, without recourse to any measurements, especially when limited amounts of mixture and low concentrations of a component thereof are required, is therefore obvious

### Summary

A device is disclosed consisting of two or more containers of different sizes from one another, dimensioned in such a way that when two liquids reach the same level in said containers said liquids are in a ratio to one another such as to form two-part mixtures in which the two components are in the desired ratio.

### Brief description of the drawings

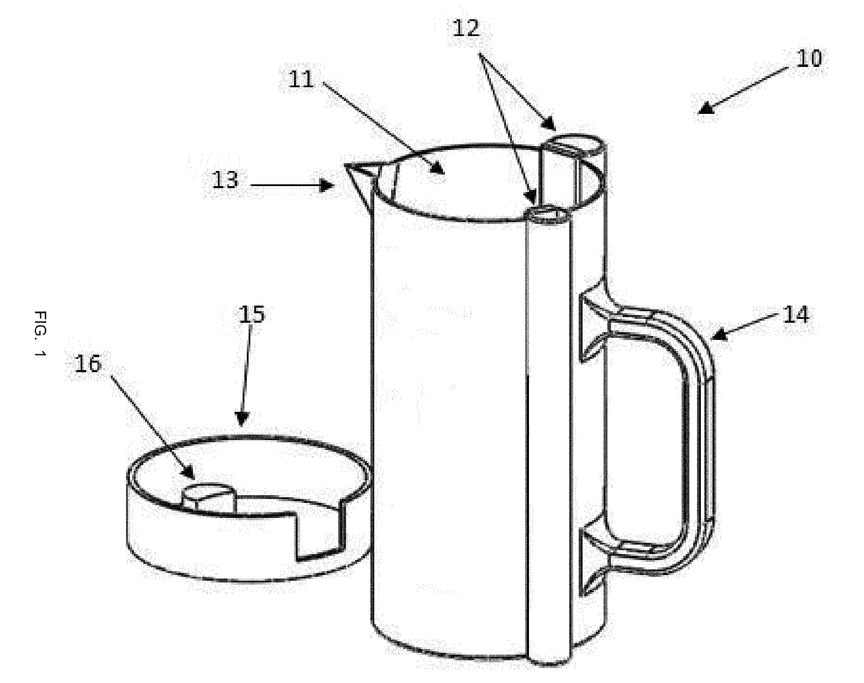

Fig. 1 shows a device according to the invention consisting of a main container and two containers of different sizes plus the optional lid.
Fig. 2 (a, b) shows a particular embodiment of the invention.

### Detailed description of the invention

The present invention makes it possible to solve the above said problem in a simple manner, by virtue of a device consisting of two or more containers of different sizes from one another, dimensioned in such a way that when two liquids reach the same level a known ratio between them will be present.

As can be seen from the drawing, the device 10 according to the invention comprises a first container 11 of a larger size (and thus volume) and one or more containers 12 of smaller dimensions than the first.

The aforementioned containers may be of any desired shape, preferably of a cylindrical shape, having a closed end and an open end.

The area of the base of the smaller containers will be of dimensions equal to a known percentage of the area of the base of the larger container, and therefore, when different liquids are poured into the two containers up to the same level, the volume of liquid contained in the smaller container will be in a determined ratio with respect to the larger container in accordance with the ratio existing between the two respective surfaces, and subsequently, by mixing the contents of the two containers (normally pouring the liquid contained in the container of a smaller volume into the liquid contained in the larger container), it will be possible to obtain the final mixture at the desired percentage.

For example, supposing the larger cylinder has a base area of 100 cm² and the smaller container has a base area of 1 cm², the heights being equal, the liquid contained in the smaller container will be 1 % of the volume of the liquid contained in the larger container.

Imagining that liquid is poured into containers to a height of 10 cm in both cases, there will actually be 1000 cm³ of liquid in the first and 10 cm³ in the second, and subsequently, by pouring the contents of the smaller container into the larger one, a mixture will be obtained of which the second liquid will form 0.9 %; in this way, by selecting the appropriate smaller container, it will be possible to obtain the mixtures at the desired concentrations without any need for measuring or weighing, simply by matching of the height of the liquids in the two containers. Obviously if the ratio between the two components is expressed in "parts" instead of percentage the device applies similarly and in the above said example the mixture will contain 1 part of the second liquid for 100 parts of the first.

In particular, the smaller container will have a volume which makes it possible to prepare mixtures at 2 % or 4 % (as is normally required for petrol/oil mixtures) or between 1 and 3.5 % (as is often required, for example, for pesticides).

Preferably the larger container will have a spout 13, formed on the upper edge thereof, and a handle 14 to facilitate the transfer of the mixture once mixing is complete.

Similarly the containers having dimensions smaller than those of the larger container will preferably be provided, on the upper edges thereof, with appropriate engagement means (for example a clip) which make it possible to connect them thereto, on the outer surface, in a stable manner so as to facilitate and increase the precision of the level comparison.

If desired, a portion of the lateral surface of the containers of smaller dimensions may be slightly recessed (in accordance with the radius of curvature of the larger container) so as to ensure better adhesion to the outer surface of the larger container, and also the upper part may be slightly tapered so as to facilitate the introduction of the liquid.

If desired, the larger container may be provided with a lid 15 for closure after use, and also said lid may have shaped holes 16 which can accommodate the containers of smaller dimensions when the device put away pending subsequent use.

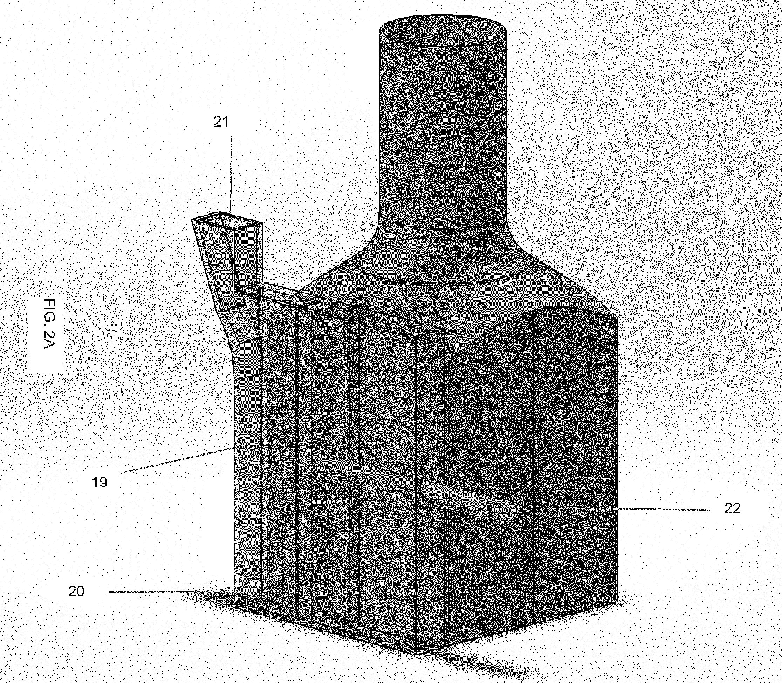

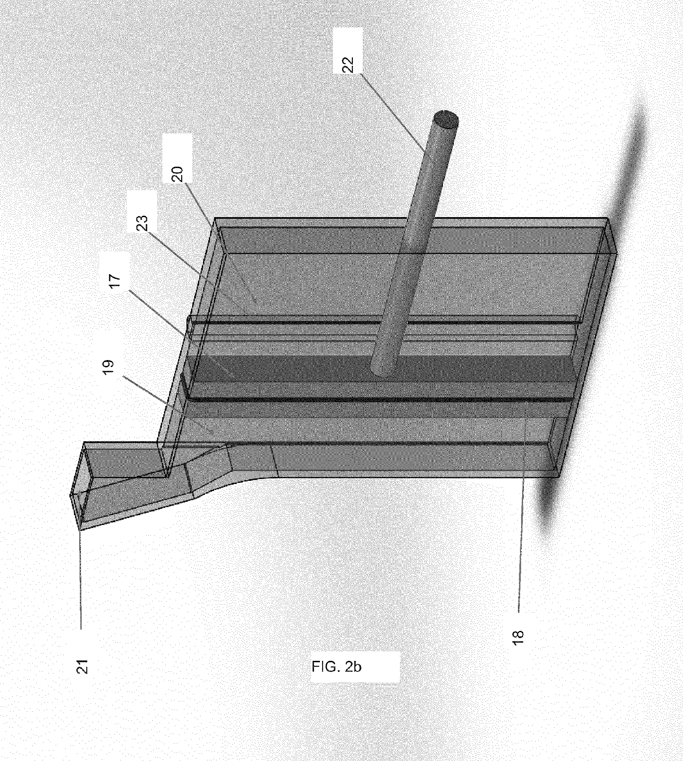

In accordance with a particular embodiment of the invention (see Fig. 2 and b) the two containers are of a substantially parallelepiped shape having a square or rectangular base.

The container of smaller volume contains a piston 17, which can slide therein and which is provided with appropriate liquid-tight seals 18 (for example O-rings). The piston 17 therefore divides the container containing it into two chambers 19 and 20, one of which is provided with an opening 21 (optionally funnel-shaped) for introducing the liquid.

By sliding the piston (for example pulling or pushing a handle 22, which is attached thereto with one of its extremities and projects from the container with the other through an opening formed in the wall of said container), the volume of the chamber connected to the opening 21 can be increased or decreased as desired and in a determined manner, and subsequently, by pouring into it the liquid to be mixed, it will be possible to create various mixtures with a single dispenser, using the same principle disclosed above.

If preferred, the container of a smaller volume may have an external protuberance 23, which can engage with a corresponding cavity formed in the wall of the container of a larger volume so as to facilitate and increase the precision of the level comparison.

All of the containers may be made of any material suited for the purpose, which is therefore compatible with the liquids to be measured, and at least a portion of the lateral surfaces thereof should be transparent over the entire height of the container, so as to make it possible to see the height reached by the liquid poured into them.

## Claims

1. Device consisting of two or more containers of different sizes from one another, dimensioned in such a way that when, the two liquids reach the same level in said containers, said liquids are in a known volume ratio to one another.

2. Device (10) according to claim 1, comprising a first container (11) of a larger size and one or more containers (12) of smaller dimensions which are proportional to the dimensions of the first.

3. Device according to claims 1 and 2 of any size and shape, preferably of a cylindrical shape, having a closed end and an open end.

4. Device according to claims 1 - 3, wherein the area of the base of the smaller containers (12) is of dimensions equal to a known percentage of the area of the base of the larger container (11).

5. Device according to claims 1 - 4, wherein the larger container (10) has a spout (13), formed on its upper edge, and a handle (14) and is optionally provided with a lid (15) for closure after use.

6. Device according to claims 1 - 5, wherein the containers (12) of smaller dimensions than the larger container have, on their upper edge, suitable engagement means which make it possible to connect them thereto in a stable manner so as to facilitate and increase the precision of the level comparison.

7. Device according to claims 1 - 6, wherein a portion of the lateral surface of the containers (12) of smaller dimensions is slightly recessed, in accordance with the radius of curvature of the larger container, so as to ensure its better adhesion to the outer surface of the larger container.

8. Device according to claim 7, wherein said lid has shaped holes (16) which can accommodate the containers of smaller dimensions.

9. Device according to claims 1 - 8, wherein the containers (11) and (12) are made of a material which is compatible with the liquid to be measured and wherein at least a portion of the lateral surfaces thereof is transparent over the entire height of the container so as to make it possible to see the height reached by the liquid poured into them.

10. Device according to claims 1 - 9, wherein both the container of larger volume and those of a smaller volume are of a parallelepipedal shape having a square or rectangular base, and wherein the container of smaller volume contains a plunger piston (17), which is provided with appropriate liquid-tight seals (18) and which divides said container into two chambers (19) and (20), one of which is provided with an optionally funnel-shaped opening (21) for introducing the liquid.
